# EUROPEAN PATENT APPLICATION

(11) **EP 1 372 325 A1**
(43) Date of publication of application: **17.12.2003**
(21) Application number: 02077354.5
(22) Date of filing: 13.06.2002
(51) Int. Cl.: H04M 3/42, H04L 29/06

(54) **Telecommunication system comprising platform for activation and control of telephony services**

(71) Applicant: Koninklijke KPN N.V., 9726 AE Groningen (NL)
(72) Inventor: Los, Dirk, 2318 XV Leiden (NL); van der Werff, Martin Remco, 9741 PE Groningen (NL); Vonder, Matthijs Raymond, 9731 LW Groningen (NL); van der Waaij, Bram Dirk, 9728 TJ Groningen (NL)
(74) Representative: Prins, Adrianus Willem

(57) **Abstract**

Telecommunication system comprising a services platform (3) fit for linking a services network (1) with a telephony network (2). The services platform preferably has a modular design and comprises a Common Call Layer part (8), comprising network adapters (9) fit to connect the services platform (3) to the telephony network (2) or certain distinct parts, PSTN, GPRS, UMTS, INMARSAT etc., of it. Moreover the services platform comprises a Service Component Layer part (10), comprising service components (11) fit for activating and/or controlling different kinds of telephony services in the telephony network (2) and a Common Service Access Layer part (12), comprising service adapters (13) fit for invoking said service components (11). The services platform provides access to control features of telephony networks. Its modular design makes the platform independant of actual network technologies. Network adapters (9) connect the services platform to the telephony network. Service components (11) and services adapters (13) define the actual functionality offered to a service developer. The services platform allows telecom services to be developed in a very short time using generic application development tools and technologies.

## Description

### FIELD OF THE INVENTION

The invention refers to a telecommunication system.

### BACKGROUND

In the past years, the world of telecommunications has rapidly evolved, not in the least due to the success of services networks like the Internet and the World Wide Web. These developments have led to the widespread belief that telecom operators should place their money on advanced multimedia services, content delivery networks and other service innovations. However, at this time most telecom operators still get their main revenues from what is derogatively labeled as the Plain Old Telephony Service (POTS). As predicted, the Internet is used as a huge information resource by a growing number of users. But once information is gathered and decisions need to be made most people apparently still have a preference for person-to-person contact, resulting in a growing amount of telephone calls. As a result, the incumbent telecom operators have come to consider their traditional Public Switched Telephony Network (PSTN) as the proverbial goose laying golden eggs.

Notwithstanding the above, the way in which people make telephone calls is changing. Ten years ago, one initiated a telephone call by dialing the phone number of another person. The phone number was already known by the calling party, retrieved from a phone book or gotten through directory assistance. In some case the call was set up by operator intervention but those were about all available flavors of telephone calls. Nowadays a fair percentage of telephone calls is initiated in another way. Examples include:
- 800/900 call: The calling party dials a special phone number that is routed via a value added services platform. For instance 1 800 CALL4PIZZA might connect the caller to the nearest pizza delivery restaurant. With 800/900 calls the calling party typically does not want to speak to a specific person but is after a service or a product. In general different tariffs apply to 800/900 calls. Information providers often use 900 calls as a billing solution.
- Third party call: The call is not directly initiated by one of the two parties dialing a phone number. Instead a third party that has an interest in the two parties engaging in a phone conversation initiates it. For instance, a call center application automatically dials phone numbers from a database and then connects the call to a call center agent as soon as the phone is picked up.

As a result, it seems obvious that telecom operators can increase their revenues from their PSTN by offering more advanced ways of initiating and/or terminating phone calls as is traditionally offered. As such, minor investments in enhancing the existing PSTN will transform it into an even bigger cash cow.

Voice services are traditionally offered via the PSTN that in essence consists of a transmission network and a separated signaling network. The transmission network carries the actual voice data while the signaling network carries the data required for controlling telephone calls. The signaling network, known as the SS#7 network (Signaling System No.7) is packet switched and is divided into protocol layers that are somewhat similar to the protocol stacks used in generic data networks. The lower layers offer functionality similar to the IP protocol. The upper layers are divided into so called user parts that are defined for specific services. Examples of those user parts are ISUP (ISDN User Part) and MAP (Mobile Application Protocol) used for controlling telephone calls in fixed and mobile networks. These user parts are used by applications residing in switches and other network elements to exchange data and invoke procedures, such as letting the phone ring at the far end.

To offer more flexible telephony services the PSTN is enhanced over the years using so called Intelligent Network (IN) technology. IN resides on top of the SS#7 network using INAP (Intelligent Network Application Protocol) as a means of communication between the traditional network elements and more generic computing systems. In its bare essence, IN should be considered as a concept to hook up generic computing capabilities to the PSTN. So instead of merely setting up a phone call to the number dialed by the calling party, more advanced options are available. Examples are looking up the dialed number in a database to find out whether special actions are required for this phone call. The introduction of IN has led to a significant boom in value added services, such as 800/900 services, personal numbering schemes and many others. It is important to realize that IN enhances the basic call model. This means a phone call still starts with a person dialing a phone number, after which IN kicks in to optionally set up or terminate the call in a non-standard manner. In the recent years, the PSTN got competition from mobile networks such as GSM/GPRS and satellite networks and the UMTS network in the near future. To provide value added voice services, these network technologies incorporate the same IN technology as used for the PSTN.

The PSTN as well as the mobile networks are specialized telephony networks, which means they are specifically designed to support telephone calls and value added services for telephony. In the recent years, technology has come available to support telephone calls over generic data networks, the most prominent of those being IP, ATM, and xDSL. These technologies are commonly known as Voice over IP (VoIP), Voice over ATM (VoATM) and Voice over DSL (VoDSL). The main difference with traditional telephony networks is that both control and voice data is carried over the same network instead of having a separate control network. Especially VOIP has been in the public eye because of its potential to provide telephone calls over the public Internet, thus allowing users to make international phone calls at very low rates. However, the current state of the technology does not allow for good quality service over public infrastructures. Nowadays, VoIP and VoATM are used in private networks such as local area networks at office locations.

PSTN and mobile networks are only within reach of telecom operators. Significant investments and government licenses are required to install a network. Recent developments have focused on the conception that telecom operators will create more revenues if other parties can also use their networks. This has led to the definition of standards commonly known as Parlay/ OSA. Parlay is an initiative to define open interfaces that allow third parties to control public networks. OSA (Open Service Access) is a similar initiative specifically defined for opening up control of the third generation of mobile networks. The specifications of the open interfaces are almost identical. Therefore both initiatives are usually mentioned in the same breath.

These standards define interfaces on top of public networks that allow the use of network features from outside the network domain. A related initiative is JAIN (JAVA APIs for Integrated Networks), started by SUN Microsystems. JAIN aims to bring the control of telephony services into the JAVA domain by specifying JAVA APIs on top of IN and other control features. However, these technologies are fairly new and not yet widespread in existing networks.

On the other side of the spectrum are those parties that add value to existing voice services. When implemented within the networks these services typically take a long time to develop. From a technological perspective, implementing a service within the network should be done with great care because adding a feature to the network might disrupt the entire network. From a business perspective, adding a service to the network is only feasible when there is a large user base. Services aimed at relatively small markets are too costly to be implemented within the network. As a result, quick service innovations can only be realized when they are implemented outside the network. Telecom operators might implement these services themselves, but there is a growing market for services implemented by third parties.

In most cases a third party has difficulty in obtaining personnel with a detailed knowledge of the telecom specific technologies used in the telephony networks. And even for telecom operators there is an economical incentive to use telecom engineers for maintaining and implementing the network infrastructures and have services implemented by engineers with a more generic programming background, simply because there are more of them. As a result, both telecom operators and third parties desire to implement services using generic computing technology for which tool support is widely available within the services network domain and programming staff can be easily found. Examples of these technologies are the widespread HTTP protocol, generic messaging solutions or the SOAP (Simple Object Access Protocol).

### SUMMARY

One aspect of the present invention is to fill the gap between the service development environment, incorporated in the services network (Internet, World Wide Web), and the actual voice networks and their control features.

Another aspect of the invention is to provide access to service components that bring functionality from telephony networks to the domain of service developers by presenting a services platform linked to the telephony network at the one side and to the non-voice services domain, the services network, at the other side.

Yet another aspect of the invention is to provide a platform for linking the telephony domain and the non-voice services domain using different types of protocols, both at the telephony side and at the non-telephony services side.

The interlinking services platform brings telephony features into the domain of the service developers, residing in the services network (Internet etc.). By providing these features based on different technologies, the service developer can use the preferred technology and toolkit while the developer only needs a basic understanding of the required telephony features. At the same time, the interlinking services platform shields the network from the service developer. Errors made by the service developer will not disrupt the basic service of the telephony network.

The services platform preferrably has a modular design, allowing the platform to be implemented on different networks. Thus the platform hooks up to available protocols that provide network features. Preferrably a generic model of these features is used within the services platform platform. Adapters may be added to connect to newly emerging network technologies. With the same ease, adapters towards the service developers may be added to keep in track with emerging software engineering tools and technologies.

The services platform preferrably is based upon three platform layers:
a Common Call Layer is provided at the side of the telephony network, presenting a generic model of telephony features and thus enabling that a telephone call within e.g. a VoIP network has the same characteristics as a call within e.g. a mobile network or the PSTN, abstracting away from the technology used to connect to the telephony network (e.g. Parlay/OSA, JAIN, INAP, etc.).
a Service Component Layer is provided at the side of the (non-voice) services network, offering an interface to the services domain by means of a number of Service Components between the Common Call Layer and the Service Component Layer, providing various functionalities to service developers residing in the services network, like
   ConnectAB: a component providing basic call control to a service developer. The service developer invokes the component with two parameters representing phone numbers. The service developer can now easily set up a telephone call from within an application.
   AcallsB: allowing the service developer to be notified of telephone calls being set up in the network. Now, a service developer can implement applications that perform actions once a specific number is dialed. An example of such an application would be a call screening applications.
   Rulebased routing: enabling to update a set of rules that control the actual calls in the network. This component relieves the service developer of having to implement an application with real-time needs because there is no requirement for the application to respond within the timeframe of the few seconds it would take to set up a telephone call.
a Common Service Access Layer at the side of the services network and providing service developers with a common view on and accessibility to the service components offered by the Service Component Layer. Independent of the actual functionality provided by each service component, a service developer can always use the same method accessing and activatin the relevant service component.

### BRIEF DESCRIPTION OF THE DRAWINGS

Figure 1 shows schematically the preferred positioning the proposed services platform.
Figure 2 shows an exemplary embodiment of the services platform.
Figure 3 shows a detailed example of a SOAP message as used in the services platform software.

### DETAILED DESCRIPTION OF THE DRAWINGS

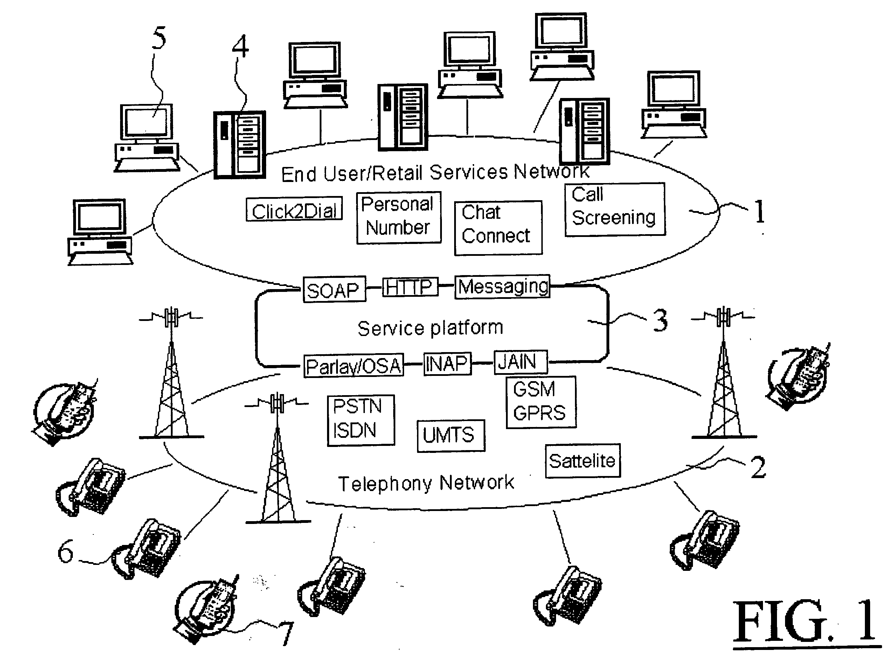

Figure 1 shows a data based servicenetwork 1, e.g. the Internet, a public telecommunications network 2, incorporating networks like networks enabled for VoIP, VoATM, PSTN, ISDN, GSM, GPRS, UMTS, Satellite communicatiions (INMARSAT etc.), and an interlinking services platform 3, incorporated in one or more platform servers.

To the services network are connected several (retail) servers 4 and end user terminals 5, which can connect to each other and to the services platform 3. Use may be made of several protocols, e.g. SOAP, messaging (e.g. email), HTTP etc. to activate several services, like click-to-dial, personal number, call screening, chat connect etc.

To the telephony network 2 may be connected several kinds of telephony terminals e.g. terminals 6 for fixed telephony or terminals 7 for mobile telephony.

The services platform 3 is enabled to communicate with the telephony domain 2 using several protocols, e.g. Parlay/OSA, INAP, JAIN, etc. Under control of the servers 4 and/or terminals 5, the requested services, like click-to-dial, chat connect etc. may be activated under control of services network compatible client and/or server software modules, using the services network related protocols like HTTP, SOAP etc., which are translated by the services platform 3 into telephony related protocols like Parlay, JAIN etc., which control the relevant network components of the PSTN, ISDN, GSM, GPRS etc,

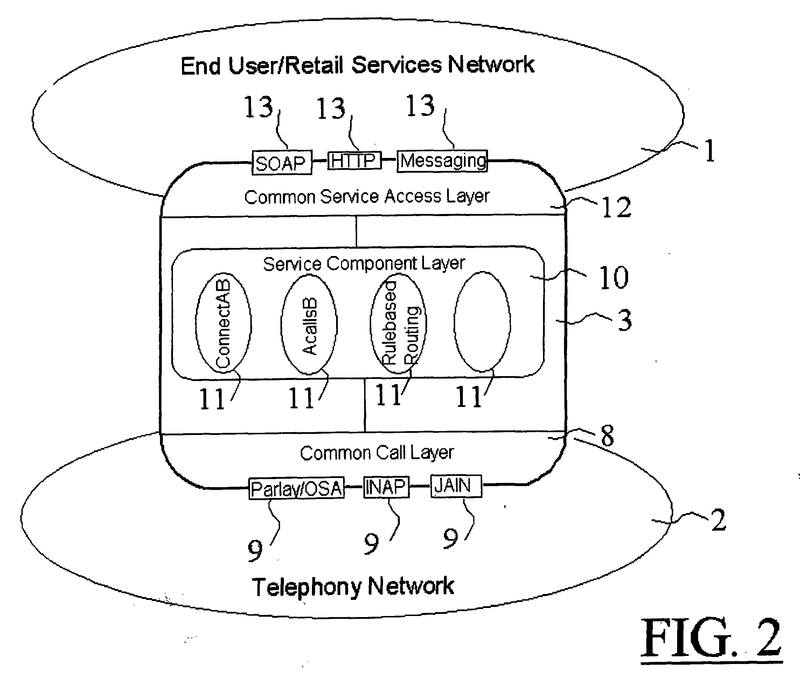

Figure 2 shows a exemplary embodiment of the services platform 3. The services platform preferrably has a modular design as is depicted in figure 2.

A Common Call Layer part 8 comprises network adapters 9 that are defined to connect the platform 3 to the telephony network 4 or certain distinct parts of it, e.g. PSTN, GPRS, UMTS, INMARSAT etc.. Different network adapters 9 can be defined, implemented and added to the platform at any stage. Any new network adapter 9 will achieve the following:
Connect another network to the WebTel platform without adding functionality. In this case, no new capabilities become available, but the existing capabilities become available in another network.
Provide new functionality to the WebTel platform. In this case, new service components may be developed once the new network adapter is finalized.

The same kind of modular design applies to a Service Component Layer part 10 comprising service components 11 fit for different kinds of telephony related services. The service components 11 can be established at any time. Adding a new service component 11 will provide new (telephony) features to the service developers (residing in the services network domain 1)

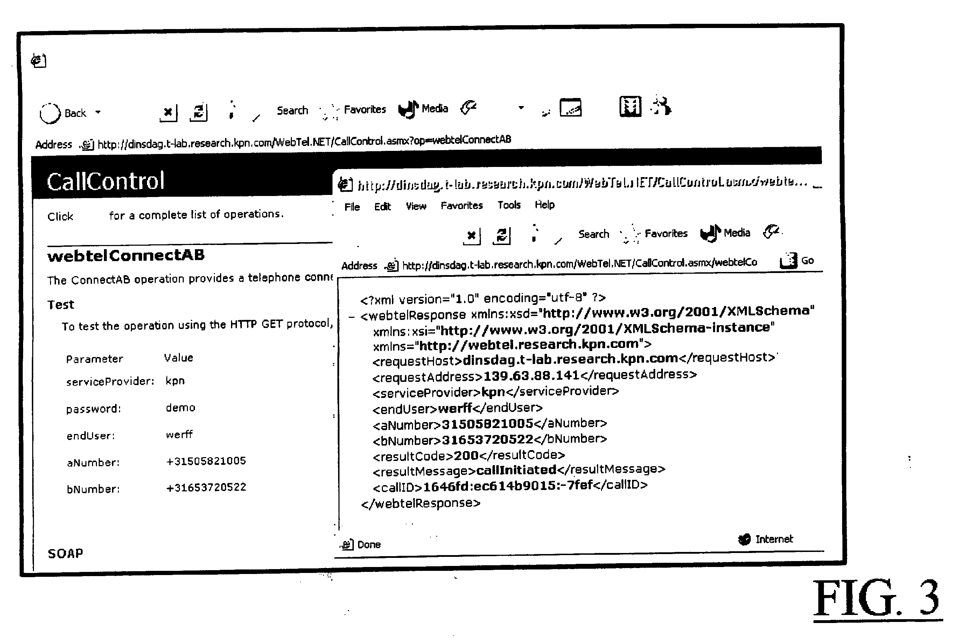

A Common Service Access Layer part 12 comprises several service adapters 13, each of them defining the actual protocol and access method that a service developer needs to invoke a specific service component 11. Adding a new service adapter 13 does not provide new features to the service developer but does provide a new access protocol and/or access method. An example of such a service adapter is the SOAP adapter that allows service developers to invoke service components using the SOAP protocol. As SOAP is nowadays embedded in various development environments, this greatly simplifies life of a service developer. An example of a SOAP message is shown in figure 3.

The service components 11 running in the Service Component Layer 10 part define the actual functionality offered by the services platform 3 to the servers 4 and user terminals 5 in the services network 1. The service components may be rather basic, such as "ConnectA-to-B "or "A calls B" components. A fair amount of service logic is required to transform the components into a complete service. This puts some constraints on the service developers, as they need to develop a robust real-time service application. Other service components may be more of a complete service. For instance, a "Rule based Routing" component with a rule engine running on the services platform can be easily transformed into an end-user service by merely providing a simple web front-end for updating the rules in the rule engine. In this case there are no real-time requirements to the service application.

The services platform 3 is extremely flexible as it is easily extendible at three levels. It can be connected to a variety of networks and implementing new network adapters will accommodate emerging network technologies. The service components 11 define the actual service features available to service developers. Features can easily be added by defining new service components 11. The access methods and protocols are easily extendable when demanded by service developers. As such, the services platform is a future proof investment.

Currently, the services platform 3 implements a stable framework for the Common Call Layer part 8, the Service Component Layer 10 and the Common Service Access Layer part 12. Within this framework a set of network adapters 9, service components 11 and service adapters 13 is implemented. At this time, the following services may be implemented using the services platform 3:
ClickToDial
   The ClickToDial service brings the call setup features into the web-domain (internet). The services platform 3 offers a (wholesale) ConnectAB component using an HTTP service adapter 13. Anyone with basic knowledge of web-development tools can subsequently set up phone calls. It allows registered users to indicate their active terminal (office phone, work phone or mobile). A user can update his phone book but also has access to the overall KPN Valley online phone book on the intranet. Subsequently, phone calls are made by clicking on a phone number and the call is set up between the active user terminal and the number of the called party.
ChatConnect
   The ChatConnect service is an add-on to existing chat rooms on the Internet. The service allows two users in a chat room to set up a phone call without disclosing phone numbers. When a user wants to have a phone call with another user in a chat room, he or she invokes the ChatConnect service. The service asks the other user for approval and his or her phone number. Subsequently, the initiating user is provided with a 0900 number and a PIN code. After dialing into the number and giving the PIN code the initiating user is connected to the other user. Neither user knows the phone number of the other user.
Personal number
   The Personal Number service is based on the wholesale (viz. to be offered to end users via "wholesale" servers 4) AcallsB component. A user registers with the service and indicates special actions need to be taken when the user is called. The AcallsB component notifies the service application when the user is called thus allowing the application to change the destination of this phone call. For instance, the user might set up a blacklist of people that should be directed immediately to voice mail.
Office.Phone
   The Office.Phone service enriches e.g. MICROSOFT's MS Office Suite and the like with telephony features. It allows for clickable phone numbers in MS Office documents. The service is based on the same ConnectAB component as used for ClickToDial.

The services platform 3 may preferrably be implemented by means of the EJB (Enterprise JAVA Beans) software platform and tools. EJB is a component software architecture supplied by Sun Microsystems, Inc. that is meant to build Java applications that run in servers 4 within the services network 1. Applicant surprisingly found that EJB also can be used very well for the implementation of the services platform 3 and its components as presented and discussed above.

EJB uses a "container" layer that provides common functions such as security and transaction support and delivers a consistent interface to the applications regardless of the type of server. CORBA is the infrastructure for EJBs, and at the wire level, EJBs look like CORBA components. EJBs are the backbone of Sun's J2EE (Java 2 Platform, Enterprise Edition) platform, which provides a pure Java environment for developing and running Web-based applications. J2EE comprises a specification, reference implementation and set of testing suites. Its core component is Enterprise JavaBeans, followed by JavaServer Pages and Java servlets and a variety of interfaces for linking to various resources.

Summarizing, the present services platform 3 provides access to control features of the telephony network 2 (incl. sub-networks like PSTN, ISDN, GSM, UMTS etc.). Its modular design makes the platform independent of actual network technologies. Network adapters 9 connect the platform 3 to an actual network 2 and can be added at a later time. Service components 11 and service adapters 13 define the actual functionality offered to a service developer. These modules can be installed at any time. The services platform can be deployed on existing networks right now and can easily migrate towards a more future proof Parlay/OSA scenario by merely adding a new network adapter. The services platform allows telecom services to be developed in a very short time using generic application development tools and technologies. From an economical perspective telecom operators can devote their sparse staff of telecom engineers to the actual maintenance and development of the telephony infrastructure. At the same time, rapid service introduction comes into reach, as no enhancements to the telephony infrastructure are required to implement new services. This approach fits better in the current Internet era of service development where services are quickly launched but as quickly dismantled if they are unsuccessful. At the same time, the presented services platform brings telephony features in reach of third parties. It hides the underlying telephony networks thus allowing third parties to use telephony features in their application without knowledge of telephony technology. It also acts as a shield, defending the telephony infrastructure from errors made by third parties. Enabling third parties is an excellent strategy for telecom operators to generate more revenues out of the existing infrastructure.

## Claims

1. Telecommunication system comprising a services platform (3) fit for linking a a services network (1) with a telephony network (2).

2. Telecommunication system according to claim 1, wherein the services platform (3) has a modular design and comprises
a Common Call Layer part (8), comprising network adapters (9) fit to connect the services platform (3) to the telephony network (2) or certain distinct parts (PSTN, GPRS, UMTS, INMARSAT etc.) of it;
a Service Component Layer part (10), comprising service components (11) fit for activating and/or controlling different kinds of telephony services in the telephony network (2);
a Common Service Access Layer part (12), comprising service adapters (13) fit for invoking said service components (11) from the services network (1).

3. Telecommunications system according to claim 1, wherein the services platform (3) is implemented by Enterprise JAVA Beans software modules.

4. Services platform (3) fit for linking a a services network (1) with a telephony network (2), comprising
a Common Call Layer part (8), comprising network adapters (9) fit to connect the services platform (3) to the telephony network (2) or certain distinct parts (PSTN, GPRS, UMTS, INMARSAT etc.) of it;
a Service Component Layer part (10), comprising service components (11) fit for activating and/or controlling different kinds of telephony services in the telephony network (2);
a Common Service Access Layer part (12), comprising service adapters (13) fit for invoking said service components (11) from the services network (1).
